# EUROPÄISCHE PATENTSCHRIFT

(11) **EP 1 290 813 B1**
(45) Veröffentlichungstag und Bekanntmachung des Hinweises auf die Patenterteilung: **28.04.2004**
(21) Anmeldenummer: 01927578.3
(22) Anmeldetag: 17.03.2001
(51) Int. Cl.: H04B 7/005

(54) **VERFAHREN ZUR REGELUNG DER SENDELEISTUNG EINER SENDESTATION UND SENDESTATION**
METHOD FOR REGULATING THE TRANSMITTING POWER OF A TRANSMIT STATION, AND CORRESPONDING TRANSMIT STATION
PROCEDE POUR REGULER LA PUISSANCE D'EMISSION D'UNE STATION D'EMISSION, ET STATION D'EMISSION

(30) Priorität: 20.05.2000 DE 10025041
(43) Veröffentlichungstag der Anmeldung: 12.03.2003
(73) Patentinhaber: ROBERT BOSCH GMBH, 70442 Stuttgart (DE)
(72) Erfinder: KOWALEWSKI, Frank, 38228 Salzgitter (DE); BAER, Siegfried, 75179 Pforzheim (DE)
(86) Internationale Anmeldenummer: PCT/DE2001/001028
(87) Internationale Veröffentlichungsnummer: WO 2001/091320

(56) Entgegenhaltungen:
- EP-A- 0 682 417
- EP-A- 0 926 842
- WO-A-96/31014
- WO-A-97/26716
- DE-A- 19 821 519

## Beschreibung

### Stand der Technik

Aus der noch nicht vorveröffentlichten deutschen Patentanmeldung mit dem Aktenzeichen 199 58 383.8 ist bereits ein Verfahren zur Regelung der Sendeleistung einer Sendestation in einem Übertragungssystem in Abhängigkeit einer Schätzung des Signal-/Interferenzverhältnisses in einer Empfangsstation bekannt, wobei aufgrund eines Befehls der Empfangsstation die Sendeleistung in der Sendestation geändert wird.

Die Dokumente DE-A-19821519 und WO-A-9726716 beschreiben Vefahrens zur Schrittweitenbestimmung bei einer Sendeleistungsregelung.

### Vorteile der Erfindung

Das erfindungsgemäße Verfahren zur Regelung der Sendeleistung einer Sendestation und die erfindungsgemäße Sendestation mit den Merkmalen der unabhängigen Ansprüche haben demgegenüber den Vorteil, dass der Betrag der Änderung der Sendeleistung in Abhängigkeit von einem Leistungsverhältnis zwischen der aktuellen Sendeleistung und einem zeitlichen Mittelwert der Sendeleistung so eingestellt wird, dass bei ansteigendem Wert des Leistungsverhältnisses auch der Betrag der Änderung der Sendeleistung erhöht wird. Auf diese Weise kann die Sendeleistung schneller und genauer an die Eigenschaften der Übertragungskanäle des Übertragungssystems angepasst werden. Die Abweichung des in der Empfangsstation gemessenen Signal-/Interferenzverhältnisses von einem vorgegebenen Zielwert kann somit möglichst klein gehalten werden. Vor allem bei höheren Relativgeschwindigkeiten zwischen Sendestation und Empfangsstation auftretende schnelle und tiefe Dämpfungseinbrüche auf einem Übertragungskanal zwischen den beiden Stationen können somit ausgeregelt werden. Dadurch werden Übertragungsfehler reduziert.

Ein weiterer Vorteil besteht darin, dass zur Durchführung des erfindungsgemäßen Verfahrens lediglich Veränderungen in einer herkömmlichen Sendestation erforderlich sind, die darin bestehen, dass eine Auswerteeinheit vorgesehen ist, die die Sendeleistung der Sendestation in Abhängigkeit des empfangenen Befehls der Empfangsstation nach dem erfindungsgemäßen Verfahren ändert. Veränderungen der Empfangsstation zur Durchführung des erfindungsgemäßen Verfahrens sind nicht erforderlich.

Durch die in den Unteransprüchen aufgeführten Maßnahmen sind vorteilhafte Weiterbildungen und Verbesserungen des Verfahrens zur Regelung der Sendeleistung einer Sendestation und der Sendestation gemäß den unabhängigen Ansprüchen möglich.

Besonders vorteilhaft ist es, dass der Zusammenhang zwischen dem Leistungsverhältnis und dem Betrag der Änderung der Sendeleistung nichtlinear gewählt wird. Auf diese Weise lassen sich schnelle und tiefe Dämpfungseinbrüche bei der Übertragung von Signalen von der Sendestation zur Empfangsstation noch schneller kompensieren, indem die Sendeleistung der Sendestation noch schneller nachgeregelt werden kann. Die Abweichung der Schätzung des Signal-/Interferenzverhältnisses vom vorgegebenen Zielwert kann somit noch geringer gehalten werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer Leistungsregelung zwischen einer Sendestation und einer Empfangsstation, Figur 2 einen Ablaufplan für die Funktionsweise des erfindungsgemäßen Verfahrens, Figur 3 einen zeitlichen Verlauf der Empfangsfeldstärke bei der Empfangsstation und der optimalen Sendeleistung der Sendestation und Figur 4 eine nichtlineare Kennlinie für die Änderung des Betrages der Sendeleistung bezogen auf ein Leistungsverhältnis.

### Beschreibung des Ausführungsbeispiels

In Mobilfunksystemen, speziell in Übertragungssystemen mit CDMA (Code Division Multiple Access) stellt die Leistungsregelung ein wichtiges Element dar. Dabei muß bei der Sendeleistung ein Kompromiß zwischen der Übertragungsqualität und der Störung anderer Teilnehmer gefunden werden. Je höher die Sendeleistung ist, desto besser ist die Übertragungsqualität und je niedriger die Sendeleistung ist, umso weniger werden andere Teilnehmer gestört. Dabei muß auch bedacht werden, dass eine Mobilstation im Allgemeinen batteriebetrieben ist. Demzufolge hängt die Betriebsdauer vom Leistungsverbrauch und damit auch von der Sendeleistung der Mobilstation ab.

Speziell bei CDMA-Übertragungssystemen, die Interferenz begrenzt sind, wie dies beispielsweise beim UMTS-Mobilfunksystem (Universal Mobile Telecommunications System) der Fall ist, ist die Systemkapazität, die beispielsweise als die Anzahl gleichzeitig aktiver Teilnehmer mit einer vorgegebenen Verbindungsqualität ausgedrückt werden kann, abhängig von der Regelung der Sendeleistung. Aufgabe der Regelung der Sendeleistung ist es dabei, für jede Mobilfunkverbindung sowohl für eine Downlink-Übertragungsrichtung von einer Basisstation zu einer Mobilstation als auch für eine Uplink-Übertragungsrichtung von der Mobilstation zur Basisstation die Sendeleistung individuell so einzustellen, dass an der jeweiligen Empfangsantenne der Basisstation bzw. der Mobilstation ein vorgegebener Zielwert SIR_{Z} des Signal-Interferenz-Verhältnisses SIR (Signal to Interference Ratio) eingehalten wird.

Im folgenden wird beispielhaft das UMTS-Mobilfunksystem betrachtet. Im UMTS-Mobilfunksystem sind zwei unterschiedliche Duplex-Übertragungsverfahren über die Luftschnittstelle vorgesehen, wie dies aus der Veröffentlichtung "TS 25.201 V3.0.0: Physical Layer - General Description" 3GPPP TSG-RAN-WG1,1999 bekannt ist. Dabei handelt es sich um das FDD-Verfahren (Frequency Division Duplex) und das TDD-Verfahren (Time Division Duplex). Bei beiden ist zumindest für die Downlink-Übertragungsrichtung eine geschlossene Regelschleife zur Regelung der Sendeleistung vorgesehen.

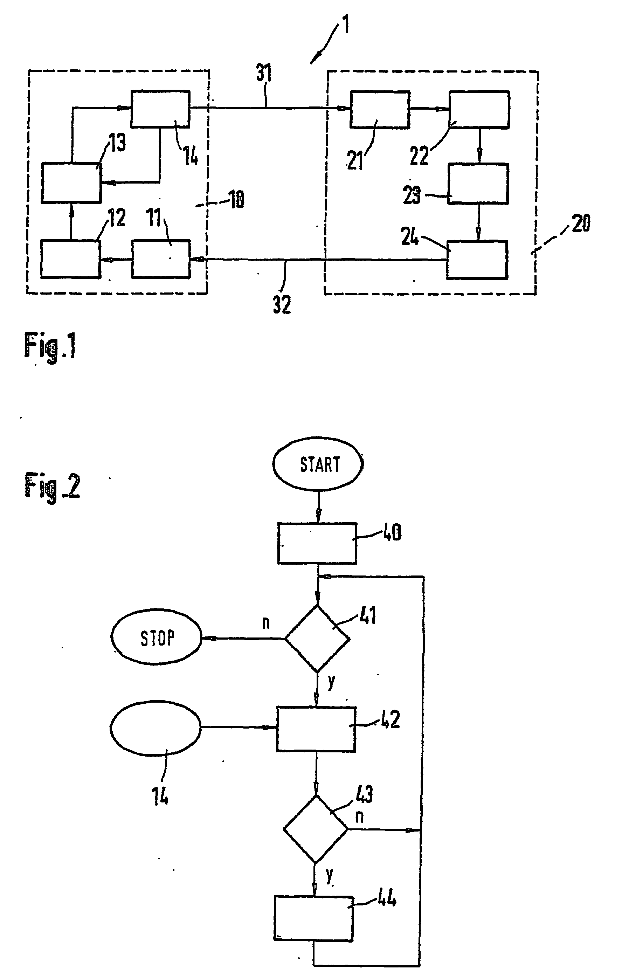

Figur 1 zeigt dabei beispielhaft das Blockschaltbild einer geschlossenen Regelschleife für die Regelung der Sendeleistung P in einem Mobilfunksystem, wie beispielsweise dem UMTS-Mobilfunksystem. Die Regelschleife ist dabei durch das Bezugszeichen 1 in Figur 1 gekennzeichnet. Sie umfasst eine Sendestation 10 und eine Empfangsstation 20. Im folgenden wird beispielhaft nur die Regelung der Sendeleistung P für die Downlink-Übertragungsrichtung betrachtet. Die Sendestation 10 ist dazu in diesem Beispiel als Basisstation und die Empfangsstation 20 als Mobilstation des UMTS-Mobilfunknetzes ausgebildet. Ein Downlink-Übertragungskanal von der Basisstation 10 zur Mobilstation 20 ist in Figur 1 durch das Bezugszeichen 31 gekennzeichnet und ein Uplink-Übertragungskanal von der Mobilstation 20 zur Basisstation 10 ist in Figur 1 durch das Bezugszeichen 32 gekennzeichnet.

Die Basisstation 10 umfasst eine erste Sendeeinheit 14 und eine erste Empfangseinheit 11. Die erste Empfangseinheit 11 ist über eine erste Auswerteeinheit 12 und eine zweite Auswerteeinheit 13 mit der ersten Sendeeinheit 14 verbunden. Weitere Module der Basisstation 10, die für das Verständnis der Erfindung nicht erforderlich sind, sind aus Übersichtlichkeitsgründen in Figur 1 nicht dargestellt. Die Mobilstation 20 umfasst eine zweite Empfangseinheit 21 und eine zweite Sendeeinheit 24. An die zweite Empfangseinheit 21 ist ein SIR-Schätzer 22 angeschlossen, der über eine dritte Auswerteeinheit 23 mit der zweiten Sendeeinheit 24 verbunden ist. Weitere Module der Mobilstation 20, die für das Verständnis der Erfindung nicht erforderlich sind, sind aus Übersichtlichtkeitsgründen in Figur 1 nicht dargestellt.

Im folgenden soll die Erfindung beispielhaft anhand des TDD-Verfahrens beschrieben werden. Dabei sendet die Basisstation 10 über die erste Sendeeinheit 14 ein Signal mit der während eines Zeitschlitzes konstanten Sendeleistung P über den Downlink-Übertragungskanal 31 an die Mobilstation 20. Diese empfängt das Signal mittels der zweiten Empfangseinheit 21. Anschließend ermittelt der SIR-Schätzer 22 das Signal-/Interferenzverhältnis SIR der Übertragung. Die dritte Auswerteeinheit 23 führt einen Vergleich des geschätzten Signal-/Interferenzverhältnisses SIR mit einem für dieses Verhältnis vorgegebenen Zielwert SIR_{Z} durch und erzeugt in Abhängigkeit dieses Vergleichs TPC-Befehle (Transmit Power Control) zur Änderung der Sendeleistung P der Basisstation 10. Mittels der TPC-Befehle wird dabei nur entschieden, ob die Sendeleistung P erhöht oder erniedrigt werden soll. Über den Uplink-Übertragungskanal 32 werden die TPC-Befehle zusammen mit weiteren Signalen von der zweiten Sendeeinheit 24 an die Basisstation 10 übermittelt.

In der Basisstation 10 werden die Signale mit den TPC-Befehlen durch die erste Empfangseinheit 11 empfangen und an die erste Auswerteeinheit 12 weitergeleitet. Die erste Auswerteeinheit 12 extrahiert aus den empfangenen Signalen die TPC-Befehle. Die TPC-Befehle und die jeweils aktuell verwendete Sendeleistung P der ersten Sendeeinheit 14 werden dann der zweiten Auswerteeinheit 13 zugeführt. In der zweiten Auswerteeinheit 13 wird dann gemäß dem nach Figur 2 beschriebenen Ablaufplan der Betrag der Änderung ΔP der Sendeleistung P der ersten Sendeeinheit 14 ermittelt, um die Sendeleistung P adaptiv an die aktuellen Eigenschaften des Downlink-Übertragungskanals 31 anzupassen.

Nach dem aktuellen Stand der Spezifikation des UMTS-Mobilfunksystems gemäß den Veröffentlichungen "TS 25.214 V3.0.0: Physical Layer Procedures (FDD)", 3GPP TSG-RAN-WG 1, 1999 und "TS 25.215 V.3.0.0 Physical Layer Procedures (TDD)" 3GPP TSG-RAN-WG 1, 1999 erfolgt die Änderung ΔP der Sendeleistung P nach dem Erhalt eines TPC-Befehls in der Sendestation 10 immer nur um einen vorgegebenen Betrag, beispielsweise um 1dB. Somit liegt eine nichtlineare Regelung vor, bei der die tatsächliche Abweichung des Signal-/Interferenz-Verhältnisses SIR vom vorgegebenen Zielwert SIR_{Z} nicht berücksichtigt wird. Es erfolgt nur eine Entscheidung, ob die Sendeleistung um den vorgegebenen Wert von beispielsweise 1 dB erhöht oder erniedrigt wird. Dadurch lassen sich beispielsweise schnell auftretende tiefe Fading-Einbrüche von beispielsweise etwa 20 dB innerhalb weniger Zeitschlitze beim TDD-Verfahren nicht durch eine entsprechende Erhöhung der Sendeleistung P der Sendestation 10 kompensieren.

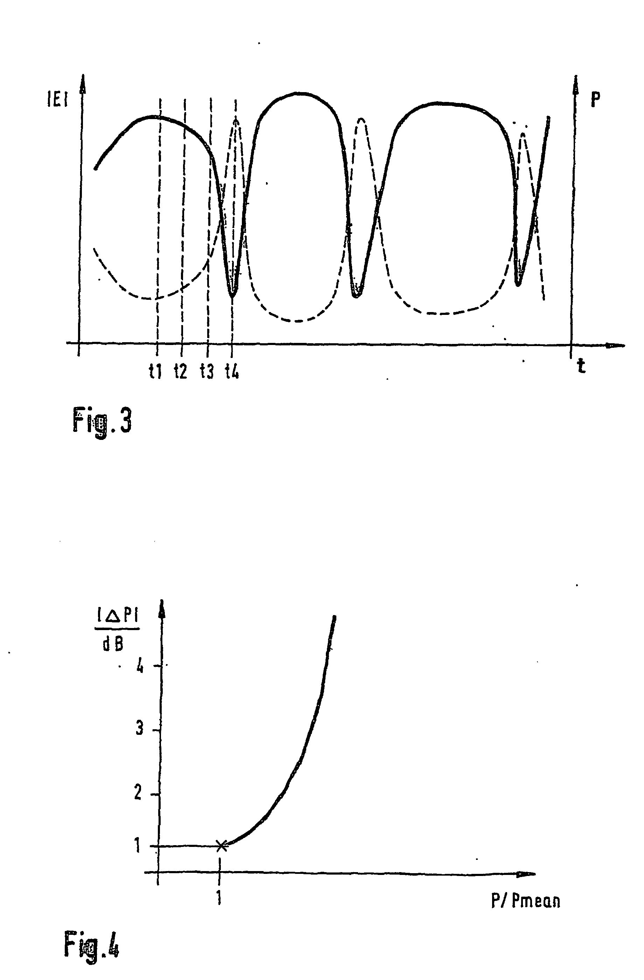

In Figur 3 ist beispielhaft der Betrag der Empfangsfeldstärke E in der zweiten Empfangseinheit 21 als durchgezogene Linie über der Zeit t für den Fall ohne Leistungsregelung dargestellt. Dieser Verlauf mit tiefen Einbrüchen wird allgemein als Fast-Fading bezeichnet und ist typisch für Mobilfunkkanäle. Die in Figur 3 gestrichelt dargestellte Linie stellt die theoretisch benötigte Sendeleistung P der ersten Sendeeinheit 14 dar, um in der zweiten Empfangseinheit 21 einen konstanten Signalpegel bei konstanter Intereferenzleistung zu erhalten, mit anderen Worten, um die Fading-Einflüsse zu kompensieren. Dabei stellt der Verlauf der Sendeleistung P über der Zeit t den Kehrwert des Verlaufs der Empfangsfeldstärke E dar.

Gemäß Figur 3 ist ein erster Zeitpunkt t1 dargestellt, bei dem die Sendeleistung P gering ist, weil der Betrag der Empfangsfeldstärke E entsprechend hoch ist. Es ist dann bestenfalls eine kleine Änderung ΔP der Sendeleistung P, beispielsweise um 1dB erforderlich, um das Signal-/Interferenz-Verhältnis SIR, das vom SIR-Schätzer 22 gemessen wurde, an den vorgegebenen Zielwert SIR_{Z} anzupassen. Erfindungsgemäß soll nun der Betrag der Änderung ΔP der Sendeleistung P größer werden, wenn die Sendeleistung P ansteigt. Ein Ansteigen der Sendeleistung P deutet darauf hin, dass ein Dämpfungseinbruch in der Empfangsfeldstärke E vorliegt, der kompensiert werden muß. Gemäß Figur 3 steigt die erforderliche Sendeleistung P nach dem ersten Zeitpunkt t1 kontinuierlich bis zu einem Maximum zu einem vierten Zeitpunkt t4 an. Zwischenwerte der Sendeleistung P werden dabei gemäß Figur 3 zu einem zweiten Zeitpunkt t2 und zu einem dritten Zeitpunkt t3 genommen, wobei t1 < t2 < t3 < t4 ist und die zur Kompensation der Empfangsfeldstärke E erforderliche Sendeleistung P nichtlinear mit zunächst zunehmender Steigung größer wird. Das bedeutet, dass der Betrag der Änderung ΔP vom ersten Zeitpunkt t1 bis zum vierten Zeitpunkt t4 ebenfalls ansteigen muß, um den in Figur 3 dargestellten Verlauf der Sendeleistung P zu realisieren und somit das im SIR-Schätzer 22 ermittelte Signal-/Interferenz-Verhältnis SIR möglichst schnell an den vorgegebenen Zielwert SIR_{Z} anzupassen.

So kann es beispielsweise erforderlich sein, zum dritten Zeitpunkt t3 bereits eine Änderung ΔP der Sendeleistung P von beispielsweise 2 dB vorzunehmen, die größer ist als die zum ersten Zeitpunkt t1 vorgenommene Änderung ΔP. Zum vierten Zeitpunkt t4 kann es weiterhin vorgesehen sein, für die Änderung ΔP der Sendeleistung P einen Wert zu wählen, beispielsweise 4 dB, der nochmals größer ist als die zum vorherigen dritten Zeitpunkt t3 gewählte Änderung ΔP der Sendeleistung P.

Um eine möglichst schnelle Nachführung der Sendeleistung P zur Kompensation von Fading-Einbrüchen wie in Figur 3 dargestellt zu ermöglichen, müssen also die Änderungen ΔP der Sendeleistung P umso größer gewählt werden, je größer die aktuelle Sendeleistung P der ersten Sendeeinheit 14 eingestellt ist. Dies kann beispielsweise mittels einer nichtlinearen Kennlinie gemäß Figur 4 erfolgen, bei der der Betrag der Änderung ΔP in dB beispielhaft über der Sendeleistung P der ersten Sendeeinheit 14 aufgetragen ist, wobei die Sendeleistung P noch auf einen zeitlichen Mittelwert Pmean der Sendeleistung P bezogen ist. Der Bezug der Sendeleistung P auf den zeitlichen Mittelwert Pmean ist notwendig, weil der absolute Wert der Sendeleistung P auch von der Entfernung der Mobilstation 20 zur Basisstation 10 abhängt und somit allein nicht aussagekräftig für Einbrüche im Verlauf der Empfangsfeldstärke E ist. Der zeitliche Mittelwert Pmean der Sendeleistung P wird dabei aus den Werten der Sendeleistungen P vorausgegangener Zeitschlitze im Downlink-Übertragungskanal 31 in der ersten Sendeeinheit 14 gebildet.

In Figur 4 ist der Verlauf des Betrages der Änderung ΔP der Sendeleistung P über dem aus dem Quotienten der Sendeleistung P und dem zeitlichen Mittelwert Pmean gebildeten Leistungsverhältnis P/Pmean in Form eines Parabelastes mit dem Scheitel beim Wertepaar (1/1) dargestellt. Für Werte des Leistungsverhältnisses P/Pmean zwischen 0 und 1 wird gemäß Figur 4 für den Betrag der Änderung ΔP der Sendeleistung P ein Wert von 1 dB gewählt. Es sind jedoch auch andere nichtlineare Zusammenhänge zwischen dem Betrag der Änderung ΔP der Sendeleistung P und dem Leistungsverhältnis P/Pmean denkbar. Durch einen nichtlinearen Zusammenhang zwischen dem Betrag der Änderung AP und dem Leistungsverhältnis P/Pmean ist eine besonders schnelle Nachführung des im SIR-Schätzer 22 geschätzten Signal-/Interferenzverhältnisses SIR an den vorgegebenen Zielwert STR_{Z} möglich. Dennoch kann zwischen dem Betrag der Änderung ΔP und dem Leistungsverhältnis P/Pmean auch ein linearer Zusammenhang gewählt werden, bei dem dann die Anpassung an den vorgegebenen Zielwert SIR_{Z} jedoch nicht so schnell im Falle von abrupten Fading-Einbrüchen nachgeführt werden kann, wie bei einem nichtlinearen Zusammenhang.

Gemäß Figur 2 wird nun das erfindungsgemäße Verfahren zur Regelung der Sendeleistung P anhand eines Ablaufplans erläutert. Nach dem Aufbau einer Telekommunikationsverbindung zwischen der Basisstation 10 und der Mobilstation 20 wird zuerst ein Startwert für die Sendeleistung P und ein initialer Wert für eine Schrittgröße für die Änderung ΔP der Sendeleistung P bei einem Programmpunkt 40 ermittelt. Diese Schrittgröße kann beispielsweise 1 dB betragen, wie in Figur 4 dargestellt. Der Startwert für die Sendeleistung P und der initiale Wert für die Schrittgröße der Änderung ΔP der Sendeleistung P kann dabei beispielsweise von der ersten Sendeeinheit 14 gewählt werden. Anschließend wird zu einem Programmpunkt 41 verzweigt. Bei Programmpunkt 41 prüft die erste Empfangseinheit 11, ob die Verbindung zwischen der Basisstation 10 und der Mobilstation 20 noch besteht. Dies kann beispielsweise dadurch geschehen, dass die erste Empfangseinheit 11 prüft, ob über den Uplink-Übertragungskanal 32 eine Verbindungsabbruchanforderung empfangen wurde. Stellt die erste Empfangseinheit 11 bei Programmpunkt 41 fest, dass die Verbindung noch besteht, so wird zu einem Programmpunkt 42 verzweigt (ja-Entscheidung), andernfalls wird das Programm verlassen (nein-Entscheidung). Bei Programmpunkt 42 wird aus den Werten der Sendeleistung P vorausgegangener Zeitschlitze des Downlink-Übertragungskanals 31 der zeitliche Mittelwert Pmean gebildet. Diese Mittelwertbildung erfolgt in der zweiten Auswerteeinheit 13. Der zweiten Auswerteeinheit 13 wird dazu auch die aktuelle Sendeleistung P aus der ersten Sendeeinheit 14 gemäß Figur 1 und Figur 2 zugeführt. Bei Programmpunkt 42 wird außerdem aus der aktuellen Sendeleistung P und dem bei Programmpunkt 42 ermittelten zeitlichen Mittelwert Pmean das Leistungsverhältnis P/Pmean in der zweiten Auswerteeinheit 13 gebildet.

Gemäß der in Figur 4 dargestellten Kennlinie wird aus dem ermittelten Leistungsverhältnis P/Pmean der zugeordnete Betrag der Änderung ΔP der Sendeleistung P bestimmt. Anschließend wird zu einem Programmpunkt 43 verzweigt. Bei Programmpunkt 43 prüft die zweite Auswerteeinheit 13, ob über den Uplink-Übertragungskanal 32 ein TPC-Befehl empfangen wurde. Ist dies der Fall, so wird zu einem Programmpunkt 44 verzweigt, andernfalls wird zu Programmpunkt 41 zurückverzweigt. Bei Programmpunkt 44 weiß die zweite Auswerteeinheit 13 aufgrund des empfangenen TPC-Befehls, dass die Sendeleistung P der ersten Sendeeinheit 14 geändert werden muß, wobei der empfangene TPC-Befehl der zweiten Auswerteeinheit 13 zudem mitteilt, welches Vorzeichen diese Änderung haben muß. Somit veranlasst die zweite Auswerteeinheit 13 bei Programmpunkt 44 die erste Sendeeinheit 14 zur Änderung der Sendeleistung P um den bei Programmpunkt 42 ermittelten Betrag der Änderung ΔP der Sendeleistung P, wobei das Vorzeichen für die Änderung durch den empfangenen TPC-Befehl vorgegeben ist. Anschließend wird zu Programmpunkt 41 zurückverzweigt.

Das beschriebene Verfahren lässt sich natürlich auch zur Regelung der Sendeleistung in der Uplink-Übertragungsrichtung anwenden, wobei in diesem Fall das Bezugszeichen 10 die Mobilstation und das Bezugszeichen 20 die Basisstation kennzeichnen würde.

Es kann auch vorgesehen sein, dass das beschriebene erfindungsgemäße Verfahren zur Leistungsregelung sowohl in Uplink- als auch in Downlink-Übertragungsrichtung angewendet wird, wobei in diesem Fall sowohl die Basisstation 10 als auch die Mobilstation 20 die erste Auswerteeinheit 12, die zweite Auswerteeinheit 13, die dritte Auswerteeinheit 23 und den SIR-Schätzer 22 aufweisen müßte, um sowohl eine SIR-Schätzung der empfangenen Signale und die Erzeugung eines entsprechenden TPC-Befehls vornehmen zu können als auch eine Bewertung empfangener TPC-Befehle und eine Anpassung der Sendeleistung P zu realisieren.

Weiterhin kann das erfindungsgemäße Verfahren auch in einem FDD-System angewendet werden.

Auch die Verwendung des erfindungsgemäßen Verfahrens in einem UMTS-Mobilfunksystem ist nur beispielhaft gewählt. Das erfindungsgemäße Verfahren kann beispielsweise auch in einem GSM-Mobilfunknetz (Global System for Mobile Communications) angewendet werden.

## Patentansprüche

1. Verfahren zur Regelung der Sendeleistung (P) einer Sendestation (10) in einem Übertragungssystem in Abhängigkeit einer Schätzung des Signal-/Interferenzverhältnisses SIR in einer Empfangsstation (20), wobei aufgrund eines Befehls TPC der Empfangsstation (20) die Sendeleistung (P) in der Sendestation (10) geändert wird, **dadurch gekennzeichnet, dass** der Betrag der Änderung (ΔP) der Sendeleistung (P) in Abhängigkeit von einem Leistungsverhältnis (P/Pmean) zwischen der aktuellen Sendeleistung (P) und einem zeitlichen Mittelwert (Pmean) der Sendeleistung (P) so eingestellt wird, dass bei ansteigendem Wert des Leistungsverhältnisses (P/Pmean) auch der Betrag der Änderung (ΔP) der Sendeleistung (P) erhöht wird.

2. Verfahren nach Anspruch 1, **dadurch gekennzeichnet, dass** der Zusammenhang zwischen dem Leistungsverhältnis (P/Pmean) und dem Betrag der Änderung (ΔP) der Sendeleistung (P) nichtlinear gewählt wird.

3. Sendestation (10) mit Mitteln zur Durchführung der Schritte des Verfahrens nach einem der Ansprüche 1 oder 2, **dadurch gekennzeichnet, dass** eine Empfangseinheit (11) vorgesehen ist, die Befehle TPC zur Änderung (ΔP) einer Sendeleistung (P) der Sendestation (10) von einer Empfangsstation (20) empfängt und dass eine Auswerteeinheit (13) vorgesehen ist, die die Sendeleistung (P) der Sendestation (10) in Abhängigkeit des empfangenen Befehls TPC ändert, wobei ein Betrag der Änderung (ΔP) der Sendeleistung (P) von einem Leistungsverhältnis (P/Pmean) zwischen der aktuellen Sendeleistung (P) der Sendestation (10) und einem zeitlichen Mittelwert (Pmean) der Sendeleistung (P) der Sendestation (10) so eingestellt wird, dass sich der Betrag der Änderung (ΔP) der Sendeleistung (P) bei ansteigendem Wert des Leistungsverhältnisses (P/Pmean) erhöht.

4. Sendestation (10) nach Anspruch 3, **dadurch gekennzeichnet, dass** der Zusammenhang zwischen dem Leistungsverhältnis (P/Pmean) und dem Betrag der Änderung (ΔP) der Sendeleistung (P) nichtlinear ist.

## Claims

1. Method for controlling the transmission power (P) of a transmission station (10) in a transmission system as a function of an estimate of the signal/interference ratio SIR in a receiving station (20), with the transmission power (P) in the transmission station (10) being varied on the basis of a command TPC from the receiving station (20), **characterized in that** the magnitude of the change (ΔP) to the transmission power (P) is set as a function of a power ratio (P/Pmean) between the actual transmission power (P) and a time mean value (Pmean) of the transmission power (P) such that, when the value of the power ratio (P/Pmean) increases, the magnitude of the change (ΔP) in the transmission power (P) is also increased.

2. Method according to Claim 1, **characterized in that** the relationship between the power ratio (P/Pmean) and the magnitude of the change (ΔP) in the transmission power (P) is chosen such that it is non-linear.

3. Transmission station (10) having means for carrying out the steps in the method according to one of Claims 1 or 2, **characterized in that** a receiving unit (11) is provided, which receives commands TPC to change (ΔP) a transmission power (P) of the transmission station (10) from a receiving station (20), and **in that** an evaluation unit (13) is provided, which varies the transmission power (P) of the transmission station (10) as a function of the received command TPC, with a magnitude of the change (ΔP) of the transmission power (P) being set by a power ratio (P/Pmean) between the actual transmission power (P) of the transmission station (10) and a time mean value (Pmean) of the transmission power (P) of the transmission station (10) such that the magnitude of the change (ΔP) in the transmission power (P) increases when the value of the power ratio (P/Pmean) increases.

4. Transmission station (10) according to Claim 3, **characterized in that** the relationship between the power ratio (P/Pmean) and the magnitude of the change (ΔP) in the transmission power (P) is not linear.

## Revendications

1. Procédé pour réguler, dans un système de transmission, la puissance d'émission d'une station d'émission (10) en fonction d'une estimation du rapport signal/interférence SIR dans une station de réception (20), la puissance d'émission (P) dans la station d'émission (10) étant modifiée par un ordre TPC délivré par la station de réception (20),
**caractérisé en ce que**
l'importance de la variation (ΔP) de la puissance d'émission (P) est réglée en fonction du rapport (P/Pmean) entre la puissance actuelle d'émission (P) et une valeur moyenne dans le temps (Pmean) de la puissance d'émission (P), de sorte que la variation (ΔP) de la puissance d'émission augmente quand la valeur du rapport de puissances (P/Pmean) augmente.

2. Procédé selon la revendication 1,
**caractérisé en ce que**
la corrélation entre le rapport de puissances (P/Pmean) et la valeur de la variation (ΔP) de la puissance d'émission (P) est choisie non linéaire.

3. Station d'émission (10) équipée de moyens d'exécution des étapes du procédé selon une des revendications 1 ou 2,
**caractérisée en ce qu'**
- il est prévu une unité de réception (11) qui reçoit d'une station de réception (10) des ordres TPC pour produire la variation (ΔP) de la puissance d'émission (P) de la station d'émission (10),
- il est prévu une unité d'évaluation (13) qui modifie la puissance (P) de la station d'émission (10) en fonction de l'ordre TPC reçu,
- la valeur de la variation (ΔP) de la puissance d'émission (P) est réglée par le rapport (P/Pmean) entre la puissance actuelle (P) de la station d'émission (10) et une valeur moyenne dans le temps (Pmean) de la puissance (P) de la station d'émission (10) de manière que la variation (ΔP) de la puissance d'émission (P) augmente quand le rapport de puissances (P/Pmean) augmente.

4. Station d'émission selon la revendication 3,
**caractérisée en ce que**
la corrélation entre le rapport de puissances (P/Pmean) et la variation (ΔP) de la puissance d'émission n'est pas linéaire.
